# EUROPEAN PATENT APPLICATION

(11) **EP 4 832 030 A1**
(43) Date of publication of application: **28.10.2026**
(21) Application number: 24920452.0
(22) Date of filing: 24.01.2024
(51) Int. Cl.: H01G 4/30

(54) **MULTILAYER CERAMIC CAPACITOR**

(71) Applicant: Murata Manufacturing Co., Ltd., Nagaokakyo-shi, Kyoto 617-8555 (JP)
(72) Inventor: OKUTANI, Chihiro, Nagaokakyo-shi, Kyoto 617-8555 (JP); FUJITA, Yukihiro, Nagaokakyo-shi, Kyoto 617-8555 (JP); MAKI, Yusuke, Nagaokakyo-shi, Kyoto 617-8555 (JP); YAMATO, Ryutaro, Nagaokakyo-shi, Kyoto 617-8555 (JP)
(74) Representative: Zimmermann, Tankred Klaus
(86) International application number: PCT/JP2024/002011
(87) International publication number: WO 2025/158565

(57) **Abstract**

A part of a second end surface (B) of at least one of a plurality of first via conductors (140) and a plurality of second via conductors (150) is recessed toward a first main surface (101) in a direction of layering. In a second main surface (102), with an area superimposed on an inner layer portion (E) in the direction of layering being defined as a first area (A1), an area not superimposed on the inner layer portion (E) in the direction of layering being defined as a second area (A2), and an area superimposed on the at least one of the plurality of first via conductors (140) and the plurality of second via conductors (150) in the direction of layering being defined as a third area (A3), a recess (C) recessed in the direction of layering is provided in the second area (A2), and a maximum thickness (Gl) in the direction of layering of a second outer layer portion (112) located between the third area (A3) and the second end surface (B) is larger than a minimum thickness (G2) in the direction of layering of the second outer layer portion (112) located between the third area (A3) and an internal electrode layer located closest to the third area (A3) in the direction of layering among a plurality of first internal electrode layers (120) and a plurality of second internal electrode layers (130).

## Description

### TECHNICAL FIELD

The present invention relates to a multilayer ceramic capacitor.

### BACKGROUND ART

Japanese Patent Laid-Open No. 2021-48261 (PTL 1) is one of prior art documents that disclose a configuration of a multilayer capacitor. A multilayer capacitor described in PTL 1 includes a multilayer body, a plurality of first outer electrodes and a plurality of second outer electrodes, a plurality of first via conductors, and a plurality of second via conductors. In the multilayer body, a plurality of dielectric layers, a plurality of first inner electrodes, and a plurality of second inner electrodes are layered. The plurality of first outer electrodes and the plurality of second outer electrodes are provided on an outer surface of the multilayer body. The plurality of first via conductors electrically connect the first outer electrodes to the plurality of first inner electrodes. The plurality of second via conductors electrically connect the second outer electrodes to the plurality of second inner electrodes. Through holes are provided in the second inner electrodes, and the first via conductors pass through the through holes with the first via conductors being insulated from the second inner electrodes. Through holes are provided in the first inner electrodes, and the second via conductors pass through the through holes with the second via conductors being insulated from the first inner electrodes. The first outer electrodes and the second outer electrodes are not provided on one principal surface and are only provided on the other principal surface.

### CITATION LIST

### PATENT LITERATURE

PTL 1: Japanese Patent Laid-Open No. 2021-48261

### SUMMARY OF INVENTION

### TECHNICAL PROBLEM

Reduction in thickness and increase in capacity of a multilayer ceramic capacitor have been demanded. From a point of view of reduction in thickness and increase in capacity, a dielectric layer to be an outer layer portion has been formed to have a smaller thickness. In an example where mechanical durability of the dielectric layer to be the outer layer portion in a portion that covers a first via conductor and a second via conductor cannot be secured due to a small thickness of the dielectric layer, a crack is more likely in the dielectric layer in that portion, the crack may become a path of entry of moisture into a multilayer body through the first via conductor and the second via conductor, and moisture resistance reliability of the multilayer ceramic capacitor may be lowered.

The present invention was made in view of problems above, and an object of the present invention is to provide a multilayer ceramic capacitor that achieves improvement in mechanical durability and moisture resistance reliability of a dielectric layer in a portion that covers a first via conductor and a second via conductor while reduction in thickness and increase in capacity are achieved.

### SOLUTION TO PROBLEM

A multilayer ceramic capacitor based on the present invention includes a multilayer body, a plurality of first via conductors, and a plurality of second via conductors. The multilayer body includes a plurality of first internal electrode layers and a plurality of second internal electrode layers alternately layered in a direction of layering with dielectric layers being interposed, and includes a first main surface and a second main surface, the second main surface being located opposite to the first main surface in the direction of layering. The plurality of first via conductors are provided inside the multilayer body and electrically connected to the plurality of first internal electrode layers. The plurality of second via conductors are provided inside the multilayer body and electrically connected to the plurality of second internal electrode layers. The multilayer body includes an inner layer portion, a first outer layer portion, and a second outer layer portion. In the inner layer portion, opposing portions where the first internal electrode layers and the second internal electrode layers are opposed to each other are layered in the direction of layering. The first outer layer portion defines the first main surface while the first outer layer portion is adjacent to the inner layer portion in the direction of layering. The second outer layer portion defines the second main surface while the second outer layer portion is adjacent to the inner layer portion in the direction of layering. A first end surface at a first main surface side of each of the plurality of first via conductors and the plurality of second via conductors is exposed at the first main surface. A second end surface at a second main surface side of each of the plurality of first via conductors and the plurality of second via conductors is covered with the second outer layer portion. A part of the second end surface of at least one of the plurality of first via conductors and the plurality of second via conductors is recessed toward the first main surface in the direction of layering. In the second main surface, with an area superimposed on the inner layer portion in the direction of layering being defined as a first area, an area not superimposed on the inner layer portion in the direction of layering being defined as a second area, and an area superimposed on the at least one of the plurality of first via conductors and the plurality of second via conductors in the direction of layering being defined as a third area, a recess recessed in the direction of layering is provided in the second area, and a maximum thickness in the direction of layering of the second outer layer portion located between the third area and the second end surface is larger than a minimum thickness in the direction of layering of the second outer layer portion located between the third area and an internal electrode layer located closest to the third area in the direction of layering among the plurality of first internal electrode layers and the plurality of second internal electrode layers.

### ADVANTAGEOUS EFFECTS OF INVENTION

According to the present invention, mechanical durability and moisture resistance reliability of a dielectric layer in a portion that covers a first via conductor and a second via conductor can be improved while reduction in thickness and increase in capacity of a multilayer ceramic capacitor are achieved.

### BRIEF DESCRIPTION OF DRAWINGS

Fig. 1 is a plan view of a multilayer ceramic capacitor according to one embodiment of the present invention viewed from a first main surface side.
Fig. 2 is a cross-sectional view of the multilayer ceramic capacitor in Fig. 1 viewed from a direction shown with an arrow II-II.
Fig. 3 is a bottom view of the multilayer ceramic capacitor according to one embodiment of the present invention viewed from a second main surface side.
Fig. 4 is a cross-sectional view showing as being enlarged, surroundings of a second via conductor in Fig. 2.
Fig. 5 is a flowchart showing a method of manufacturing a multilayer ceramic capacitor according to one embodiment of the present invention.
Fig. 6 shows an image obtained by zoomed image capture of surroundings of a first via conductor in a multilayer ceramic capacitor according to an Example.
Fig. 7 is a plan view of a multilayer ceramic capacitor according to a modification of one embodiment of the present invention viewed from the first main surface side.

### DESCRIPTION OF EMBODIMENTS

A multilayer ceramic capacitor according to one embodiment of the present invention will be described below with reference to the drawings. In the description of the embodiment below, the same or corresponding elements in the drawings have the same reference characters allotted and description thereof will not be repeated.

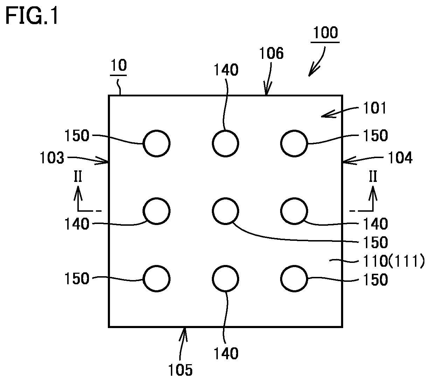

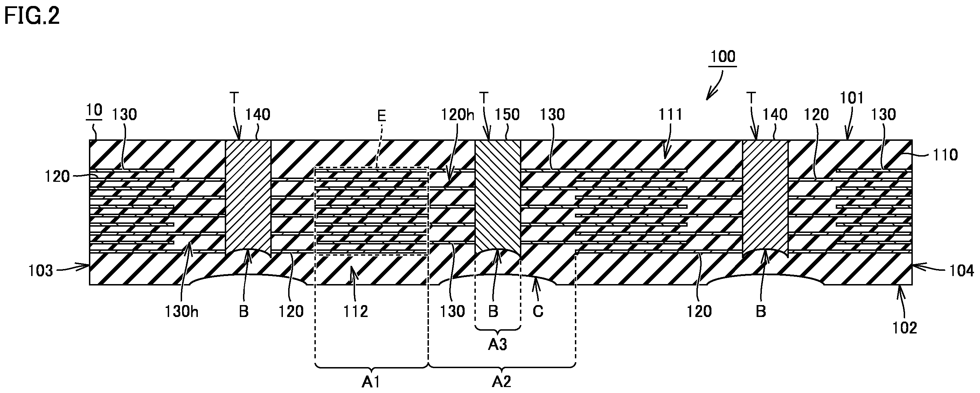

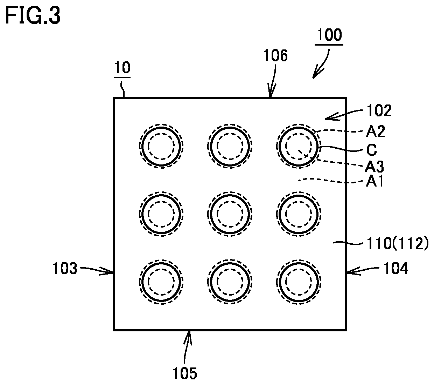

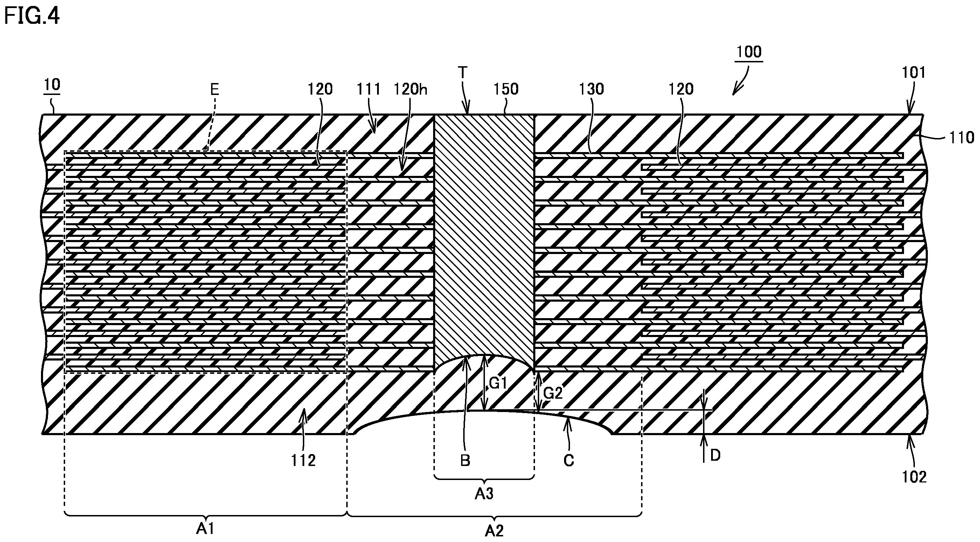

Fig. 1 is a plan view of a multilayer ceramic capacitor according to one embodiment of the present invention viewed from a first main surface side. Fig. 2 is a cross-sectional view of the multilayer ceramic capacitor in Fig. 1 viewed from a direction shown with an arrow II-II. Fig. 3 is a bottom view of the multilayer ceramic capacitor according to one embodiment of the present invention viewed from a second main surface side. Fig. 4 is a cross-sectional view showing as being enlarged, surroundings of a second via conductor in Fig. 2.

As shown in Figs. 1 to 4, a multilayer ceramic capacitor 100 according to one embodiment of the present invention includes a multilayer body 10, a plurality of first via conductors 140, and a plurality of second via conductors 150.

As shown in Figs. 2 and 4, multilayer body 10 includes a plurality of first internal electrode layers 120 and a plurality of second internal electrode layers 130 alternately layered in a direction of layering with dielectric layers 110 being interposed, and includes a first main surface 101 and a second main surface 102 located opposite to first main surface 101 in the direction of layering.

Any material may be employed for dielectric layer 110, and the dielectric layer is composed of a ceramic material mainly containing, for example, BaTiO₃, CaTiO₃, SrTiO₃, SrZrO₃, CaZrO₃, or the like. A sub component lower in content than the main component, which is selected from the group consisting of an Mn compound, an Fe compound, a Cr compound, a Co compound, and an Ni compound, may be added to these main components.

Multilayer body 10 may be in any shape. In the present embodiment, multilayer body 10 is in a rectangular parallelepiped shape as a whole. The rectangular parallelepiped shape as a whole refers, for example, to a shape which is not a perfect rectangular parallelepiped shape but is a shape that includes six surfaces and can be regarded as the rectangular parallelepiped as a whole, like a rectangular parallelepiped shape with a rounded corner and a rounded ridgeline. Therefore, multilayer body 10 has first main surface 101, second main surface 102, a first side surface 103, a second side surface 104, a third side surface 105, and a fourth side surface 106.

First side surface 103 to fourth side surface 106 of multilayer body 10 define four side surfaces which are surfaces other than first main surface 101 and second main surface 102 of the surfaces of multilayer body 10. In other words, multilayer body 10 further includes first side surface 103 to fourth side surface 106 which are the four side surfaces that connect first main surface 101 and second main surface 102 to each other. First side surface 103 is opposed to second side surface 104 and third side surface 105 is opposed to fourth side surface 106. Though first side surface 103 to fourth side surface 106 of multilayer body 10 are orthogonal to each of first main surface 101 and second main surface 102 in the present embodiment, they do not have to be orthogonal thereto.

Multilayer body 10 may have any dimension. For example, a dimension in a longitudinal direction of a rectangle when viewed from a side of first main surface 101 can be not smaller than 0.3 mm and not larger than 3.0 mm, a dimension in a lateral direction thereof can be not smaller than 0.3 mm and not larger than 3.0 mm, and a dimension in the direction of layering of dielectric layers 110, first internal electrode layers 120, and second internal electrode layers 130 can be not smaller than 50 µm and not larger than 200 µm. The dimension of multilayer body 10 in the direction of layering refers to a maximum thickness of multilayer body 10.

Each of the plurality of first internal electrode layers 120 and the plurality of second internal electrode layers 130 has a rectangular outer shape. As shown in Figs. 2 and 4, a plurality of first through holes 120h are provided in each of the plurality of first internal electrode layers 120 for insertion of the plurality of second via conductors 150. A plurality of second through holes 130h are provided in each of the plurality of second internal electrode layers 130 for insertion of the plurality of first via conductors 140.

Any material may be employed for first internal electrode layer 120 and second internal electrode layer 130, and the material contains as a main component, for example, metal such as Ni, Cu, Ag, Pd, Pt, Fe, Ti, Cr, Sn, or Au, an alloy containing such metal, or the like. First internal electrode layer 120 and second internal electrode layer 130 may contain, as a common material, a ceramic material the same as dielectric ceramic contained in dielectric layer 110. In that case, a ratio of the common material contained in first internal electrode layer 120 and second internal electrode layer 130 is, for example, not higher than 20 vol%.

Each of first internal electrode layer 120 and second internal electrode layer 130 may have any thickness, and the thickness can be, for example, approximately not smaller than 0.3 µm and not larger than 1.0 µm. Any number of first internal electrode layers 120 and any number of second internal electrode layers 130 may be provided, and the total number of internal electrode layers can be, for example, approximately not smaller than ten and not larger than one hundred and fifty.

As shown in Figs. 2 and 4, multilayer body 10 includes an inner layer portion E, a first outer layer portion 111, and a second outer layer portion 112. In inner layer portion E, opposing portions where first internal electrode layers 120 and second internal electrode layers 130 are opposed to each other are layered in the direction of layering. First outer layer portion 111 defines first main surface 101 while it is adjacent to inner layer portion E in the direction of layering. Second outer layer portion 112 defines second main surface 102 while it is adjacent to inner layer portion E in the direction of layering. Each of first outer layer portion 111 and second outer layer portion 112 is formed from dielectric layer 110.

The plurality of first via conductors 140 are provided inside multilayer body 10 and electrically connected to the plurality of first internal electrode layers 120. The plurality of first via conductors 140 pass through second through holes 130h provided in each of the plurality of second internal electrode layers 130 and they are isolated from the plurality of second internal electrode layers 130. As shown in Fig. 1, in the present embodiment, the plurality of first via conductors 140 are arranged in a zigzag manner along a side of first main surface 101 when viewed from the direction of layering. First internal electrode layers 120 are electrically connected to four first via conductors 140 aligned in two columns.

The plurality of second via conductors 150 are provided inside multilayer body 10 and electrically connected to the plurality of second internal electrode layers 130. The plurality of second via conductors 150 pass through first through holes 120h provided in each of the plurality of first internal electrode layers 120 and they are isolated from the plurality of first internal electrode layers 120. In the present embodiment, the plurality of second via conductors 150 are arranged in a zigzag manner along a side of first main surface 101 when viewed from the direction of layering. First via conductors 140 and second via conductors 150 are arranged as being aligned in rows and columns. Second internal electrode layers 130 are electrically connected to five second via conductors 150.

Each of the plurality of first via conductors 140 and the plurality of second via conductors 150 is provided inside multilayer body 10 in a manner extending in the direction of layering from first main surface 101 toward second main surface 102 of multilayer body 10. In other words, each of the plurality of first via conductors 140 and the plurality of second via conductors 150 is exposed at first main surface 101 of multilayer body 10 and not exposed at second main surface 102. Specifically, a first end surface T at the side of first main surface 101 of each of the plurality of first via conductors 140 and the plurality of second via conductors 150 is exposed at first main surface 101. A second end surface B at a side of second main surface 102 of each of the plurality of first via conductors 140 and the plurality of second via conductors 150 is covered with second outer layer portion 112. Short-circuiting between an electronic component arranged at the side of second main surface 102 and multilayer ceramic capacitor 100 can thus be suppressed.

As the plurality of first via conductors 140 and the plurality of second via conductors 150 are alternately arranged in the zigzag manner as above, magnetic fields induced by currents that flow through first via conductors 140 and second via conductors 150 cancel each other, so that an equivalent series inductance (ESL) of multilayer ceramic capacitor 100 can be lowered.

First via conductor 140 and second via conductor 150 may be in any shape, and they can be, for example, columnar. Each of first via conductor 140 and second via conductor 150 in that case has a diameter, for example, not smaller than 35 µm and not larger than 70 µm. A distance between first via conductor 140 and second via conductor 150 adjacent to each other, more specifically, a distance between the center of first via conductor 140 and the center of second via conductor 150, is, for example, approximately not shorter than 50 µm and not longer than 500 µm.

Any material may be employed for first via conductor 140 and second via conductor 150, and for example, metal such as Ni, Cu, Ag, Pd, Pt, Fe, Ti, Cr, Sn, or Au, an alloy containing such metal, or the like can be employed.

As shown in Figs. 2 and 4, a part of second end surface B of at least one of the plurality of first via conductors 140 and the plurality of second via conductors 150 is recessed toward first main surface 101 in the direction of layering. Parts of second end surfaces B of all of the plurality of first via conductors 140 and the plurality of second via conductors 150 are preferably recessed toward first main surface 101 in the direction of layering.

In the present embodiment, a central portion of second end surface B is recessed toward first main surface 101 in the direction of layering. Specifically, second end surface B is concavely curved toward first main surface 101 in the direction of layering. Only the central portion of second end surface B may be recessed toward first main surface 101 in the direction of layering, or the entirety or only a part of a portion between an edge and the central portion of second end surface B may be recessed toward first main surface 101 in the direction of layering.

As shown in Figs. 2 to 4, in second main surface 102, with an area superimposed on inner layer portion E in the direction of layering being defined as a first area A1, an area not superimposed on inner layer portion E in the direction of layering being defined as a second area A2, and an area superimposed on the at least one of the plurality of first via conductors 140 and the plurality of second via conductors 150 in the direction of layering being defined as a third area A3, a recess C recessed in the direction of layering is provided in second area A2, and as shown in Figs. 2 and 4, a maximum thickness G1 in the direction of layering of second outer layer portion 112 located between third area A3 and second end surface B is larger than a minimum thickness G2 in the direction of layering of second outer layer portion 112 located between third area A3 and an internal electrode layer located closest to third area A3 in the direction of layering among the plurality of first internal electrode layers 120 and the plurality of second internal electrode layers 130. Third area A3 is encompassed in second area A2.

As shown in Fig. 4, a dimension of a maximum depth D of recess C in the direction of layering is, for example, not smaller than 1 µm and not larger than 2.5 µm. A difference between maximum thickness G1 and minimum thickness G2 is, for example, not smaller than 2 µm. A ratio of the difference between maximum thickness G1 and minimum thickness G2 to the dimension of maximum depth D is, for example, not lower than 0.8. The dimension and dimensional relation should only be satisfied for at least one recess C at any vertical cross-section.

A plurality of external electrodes connected to first via conductors 140 and second via conductors 150 may be formed on first main surface 101. Any material may be employed for the external electrode. For example, the external electrode is a plated electrode formed by plating by barrel plating. Examples of a material for the plated electrode include Cu, Ni, Sn, and the like. The plated electrode may be formed from a single layer or a plurality of layers. The external electrode may be formed by firing a metal paste applied onto first main surface 101. A glassy inorganic substance may be contained as a common material in the metal paste.

A method of manufacturing multilayer ceramic capacitor 100 according to one embodiment of the present invention will now be described.

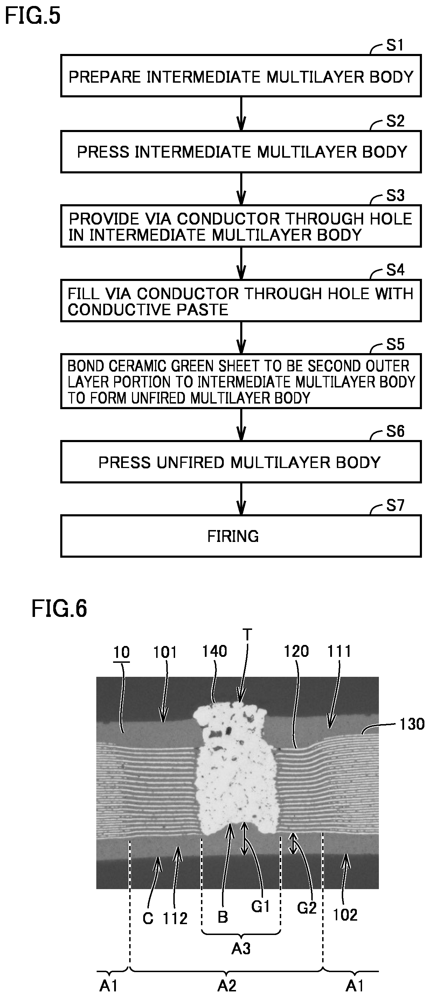

Fig. 5 is a flowchart showing a method of manufacturing a multilayer ceramic capacitor according to one embodiment of the present invention. As shown in Fig. 5, initially, an intermediate multilayer body in which ceramic green sheets to be inner layer portion E and first outer layer portion 111 are layered is prepared (S1). A conductive paste to be first internal electrode layer 120 and second internal electrode layer 130 is applied to the ceramic green sheet to be inner layer portion E, and the conductive paste is not applied to the ceramic green sheet to be first outer layer portion 111.

The intermediate multilayer body is then pressed from opposing sides in the direction of layering (S2). At this time, an elastic body provided on a rigid body abuts on the side of first main surface 101, and an elastic body provided on a rigid body abuts on the side of second main surface 102. The rigid body is formed of metal and the elastic body is formed of resin. The elastic body is, for example, a polyethylene terephthalate (PET) film. Since the number of layers of the conductive paste to be first internal electrode layer 120 and second internal electrode layer 130 in portions around first via conductor 140 and second via conductor 150 is smaller than in inner layer portion E, at the time of pressing, the portions around first via conductor 140 and second via conductor 150 are pressed by the elastic body and pushed into the intermediate multilayer body.

Via conductor through holes are then provided at positions in the intermediate multilayer body where first via conductor 140 and second via conductor 150 are to be formed (S3). The via conductor through hole is provided, for example, by irradiation with laser beams.

The via conductor through hole is then filled with a conductive paste to be first via conductor 140 and second via conductor 150 (S4). At this time, a ratio of filling the conductive paste in the via conductor through hole is lowered to a range not lower than 90% and not higher than 95% of a normal filling ratio. The normal filling ratio refers to a filling ratio set for achieving such a state that the via conductor through hole is properly buried by first via conductor 140 and second via conductor 150 after firing which will be described later.

A ceramic green sheet to be second outer layer portion 112 is then bonded to the intermediate multilayer body to form an unfired multilayer body (S5). One end of the via conductor through hole at the side of second main surface 102 is thus closed. At this time, the conductive paste to be first via conductor 140 and second via conductor 150 and the ceramic green sheet to be second outer layer portion 112 may be in contact with each other or distant from each other.

The unfired multilayer body is then pressed from the opposing sides in the direction of layering (S6). At this time, an elastic body provided on a rigid body abuts on the side of first main surface 101 and an elastic body provided on a rigid body abuts on the side of second main surface 102. The rigid body is formed of metal and the elastic body is formed of resin. The elastic body is, for example, a PET film. Since the number of layers of the conductive paste to be first internal electrode layer 120 and second internal electrode layer 130 in portions around first via conductor 140 and second via conductor 150 is smaller than in inner layer portion E, at the time of pressing, the ceramic green sheet to be second outer layer portion 112 in portions that cover the portions around first via conductor 140 and second via conductor 150 is pressed by the elastic body and pushed into the unfired multilayer body. Consequently, recess C is provided in second area A2 of second main surface 102.

First end surface T of each of first via conductor 140 and second via conductor 150 that abuts on the elastic body is substantially a flat surface. Second outer layer portion 112, however, is pushed into a part of second end surface B of each of first via conductor 140 and second via conductor 150, in correspondence with lowering in ratio of filling the conductive paste in the via conductor through hole. Consequently, the part of second end surface B of each of first via conductor 140 and second via conductor 150 is recessed toward first main surface 101 in the direction of layering. In the present embodiment, second end surfaces B of first via conductor 140 and second via conductor 150 are concavely curved toward first main surface 101 in the direction of layering.

The unfired multilayer body is then fired (S7). As a result of firing, a dielectric contained in the ceramic green sheet and a conductive material contained in the conductive paste are both sintered.

Multilayer ceramic capacitor 100 is manufactured with the manufacturing method above. In forming an external electrode, a conductive paste to be the external electrode may be applied before firing, or the external electrode may be formed by plating after firing.

In multilayer ceramic capacitor 100 according to the present embodiment, a part of second end surface B of at least one of the plurality of first via conductors 140 and the plurality of second via conductors 150 is recessed toward first main surface 101 in the direction of layering. In second main surface 102, with the area superimposed on inner layer portion E in the direction of layering being defined as first area A1, the area not superimposed on inner layer portion E in the direction of layering being defined as second area A2, and the area superimposed on the at least one of the plurality of first via conductors 140 and the plurality of second via conductors 150 in the direction of layering being defined as third area A3, recess C recessed in the direction of layering is provided in second area A2, and maximum thickness G1 in the direction of layering of second outer layer portion 112 located between third area A3 and second end surface B is larger than minimum thickness G2 in the direction of layering of second outer layer portion 112 located between third area A3 and an internal electrode layer located closest to third area A3 in the direction of layering among the plurality of first internal electrode layers 120 and the plurality of second internal electrode layers 130.

Thus, while reduction in thickness and increase in capacity of multilayer ceramic capacitor 100 are achieved, mechanical durability and moisture resistance reliability of second outer layer portion 112 which is dielectric layer 110 in the portion that covers the at least one of the plurality of first via conductors 140 and the plurality of second via conductors 150 can be improved.

A multilayer ceramic capacitor according to an Example will be described below. Fig. 6 shows an image obtained by zoomed image capture of surroundings of a first via conductor in the multilayer ceramic capacitor according to Example. The zoomed image shown in Fig. 6 was captured by a digital microscope (VHX-8000) manufactured by Keyence Corporation.

As shown in Fig. 6, a part of second end surface B of first via conductor 140 is recessed toward first main surface 101 in the direction of layering. In Example, each of first via conductor 140 and second via conductor 150 has a diameter of 40 µm, and it is within a range not smaller than 35 µm and not larger than 70 µm. A dimension of a maximum depth D of recess C in the direction of layering is 2 µm, and it is within a range not smaller than 1 µm and not larger than 2.5 µm.

Maximum thickness G1 in the direction of layering of second outer layer portion 112 located between third area A3 and second end surface B is 16 µm and minimum thickness G2 in the direction of layering of second outer layer portion 112 located between third area A3 and first internal electrode layer 120 located closest to third area A3 in the direction of layering among first internal electrode layers 120 and second internal electrode layers 130 is 10.8 µm. Relation of G1 > G2 should only be satisfied, and within a range where relation of G1 > G2 is satisfied, maximum thickness G1 is, for example, not smaller than 12 µm and not larger than 16 µm and minimum thickness G2 is, for example, not smaller than 8 µm and not larger than 12 µm.

In the present Example, a difference between maximum thickness G1 and minimum thickness G2 is 5.2 µm, and it is within a range not smaller than 2 µm. A ratio of the difference between maximum thickness G1 and minimum thickness G2 to the dimension of maximum depth D is 2.6, and it is within a range not lower than 0.8.

The multilayer ceramic capacitor according to Example could achieve improvement in mechanical durability of second outer layer portion 112 in the portion that covers first via conductor 140 and second via conductor 150 by satisfying a numerical range of the dimension and the dimensional relation above. A crack could thus be less likely in second outer layer portion 112 in that portion, and additionally, moisture resistance reliability of the multilayer ceramic capacitor could be improved while reduction in thickness and increase in capacity of the multilayer ceramic capacitor were achieved. The dimension and the dimensional relation above are preferably satisfied for all recesses C at any vertical cross-section.

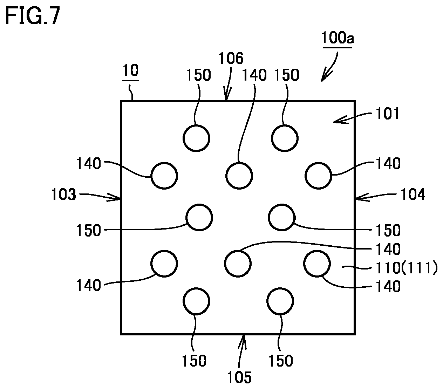

Arrangement of first via conductor 140 and second via conductor 150 is not limited to the arrangement shown in the embodiment and Example. Fig. 7 is a plan view of a multilayer ceramic capacitor according to a modification of one embodiment of the present invention viewed from the first main surface side. As shown in Fig. 7, in a multilayer ceramic capacitor 100a according to the modification of one embodiment of the present invention, a plurality of first via conductors 140 are arranged in a zigzag manner along a diagonal of the outer shape of first main surface 101 when viewed from the direction of layering. A plurality of second via conductors 150 are arranged in a zigzag manner along the diagonal of the outer shape of first main surface 101 when viewed from the direction of layering. First via conductors 140 and second via conductors 150 are arranged as being aligned in rows and columns. As the plurality of first via conductors 140 and the plurality of second via conductors 150 are alternately arranged in the zigzag manner as above, magnetic fields induced by currents that flow through first via conductors 140 and second via conductors 150 cancel each other, so that an equivalent series inductance (ESL) of multilayer ceramic capacitor 100a can be lowered.

Features that can be combined may be combined with each other in the description of the embodiment and Example above.

It should be understood that the embodiment and Example disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

10 multilayer body; 100 multilayer ceramic capacitor; 101 first main surface; 102 second main surface; 103 first side surface; 104 second side surface; 105 third side surface; 106 fourth side surface; 110 dielectric layer; 111 first outer layer portion; 112 second outer layer portion; 120 first internal electrode layer; 120h first through hole; 130 second internal electrode layer; 130h second through hole; 140 first via conductor; 150 second via conductor; A1 first area; A2 second area; A3 third area; B second end surface; C recess; D maximum depth; E inner layer portion; G1 maximum thickness; G2 minimum thickness; T first end surface.

## Claims

1. A multilayer ceramic capacitor comprising:
a multilayer body including a plurality of first internal electrode layers and a plurality of second internal electrode layers alternately layered in a direction of layering with dielectric layers being interposed, the multilayer body including a first main surface and a second main surface, the second main surface being located opposite to the first main surface in the direction of layering;
a plurality of first via conductors provided inside the multilayer body and electrically connected to the plurality of first internal electrode layers; and
a plurality of second via conductors provided inside the multilayer body and electrically connected to the plurality of second internal electrode layers, wherein
the multilayer body includes
an inner layer portion in which opposing portions where the first internal electrode layers and the second internal electrode layers are opposed to each other are layered in the direction of layering,
a first outer layer portion that defines the first main surface while the first outer layer portion is adjacent to the inner layer portion in the direction of layering, and
a second outer layer portion that defines the second main surface while the second outer layer portion is adjacent to the inner layer portion in the direction of layering,
a first end surface at a first main surface side of each of the plurality of first via conductors and the plurality of second via conductors is exposed at the first main surface,
a second end surface at a second main surface side of each of the plurality of first via conductors and the plurality of second via conductors is covered with the second outer layer portion,
a part of the second end surface of at least one of the plurality of first via conductors and the plurality of second via conductors is recessed toward the first main surface in the direction of layering,
in the second main surface, with an area superimposed on the inner layer portion in the direction of layering being defined as a first area, an area not superimposed on the inner layer portion in the direction of layering being defined as a second area, and an area superimposed on the at least one of the plurality of first via conductors and the plurality of second via conductors in the direction of layering being defined as a third area,
a recess recessed in the direction of layering is provided in the second area, and
a maximum thickness in the direction of layering of the second outer layer portion located between the third area and the second end surface is larger than a minimum thickness in the direction of layering of the second outer layer portion located between the third area and an internal electrode layer located closest to the third area in the direction of layering among the plurality of first internal electrode layers and the plurality of second internal electrode layers.

2. The multilayer ceramic capacitor according to claim 1, wherein
a dimension of a maximum depth of the recess in the direction of layering is not smaller than 1 µm and not larger than 2.5 µm.

3. The multilayer ceramic capacitor according to claim 2, wherein
a difference between the maximum thickness and the minimum thickness is equal to or larger than 2 µm.

4. The multilayer ceramic capacitor according to claim 1, wherein
a ratio of a difference between the maximum thickness and the minimum thickness to a dimension of a maximum depth of the recess in the direction of layering is equal to or higher than 0.8.

5. The multilayer ceramic capacitor according to any one of claims 1 to 4, wherein
each of the plurality of first via conductors and the plurality of second via conductors has a diameter not smaller than 35 µm and not larger than 70 µm.
